# EUROPÄISCHE PATENTANMELDUNG

(11) **EP 2 677 378 A1**
(43) Veröffentlichungstag der Anmeldung: **25.12.2013**
(21) Anmeldenummer: 12172886.9
(22) Anmeldetag: 21.06.2012
(51) Int. Cl.: G05B 19/414

(54) **Verfahren zum Betreiben einer Automatisierungsanlage**

(71) Anmelder: Siemens Aktiengesellschaft, 80333 München (DE)
(72) Erfinder: Palmin, Anna, 76187 Karlsruhe (DE); Runde, Stefan, 75045 Walzbachtal (DE); Deiretsbacher, Karl-Heinz, 91090 Effeltrich (DE); Gerlach, Hendrik, 91058 Erlangen (DE); Hock, Christian, 90763 Fürth (DE); Lüder, Stefan, 76137 Karlsruhe (DE); Volkmann, Frank, 90475 Nürnberg (DE)

(57) **Zusammenfassung**

Die Erfindung betrifft ein Verfahren zum Betreiben einer Automatisierungsanlage durch Bereitstellen von zumindest zwei Automatisierungsgeräten der Automatisierungsanlage, Bereitstellen einer Automatisierungsaufgabe für die Automatisierungsanlage, Festlegen zumindest eines Sicherheitswerts, der qualitativ einen Schutz gegen einen unberechtigten Zugriff und/oder ein Schutzniveau, das ausreichend ist, um einem solchen Zugriff standzuhalten, beschreibt, in Abhängigkeit von der Automatisierungsaufgabe (S10), Unterteilen der Automatisierungsaufgabe in zumindest zwei Teilaufgaben und Verteilen der zumindest zwei Teilaufgaben an die zumindest zwei Automatisierungsgeräte in Abhängigkeit von dem zumindest einen festgelegten Sicherheitswert (S12).

## Beschreibung

Die vorliegende Erfindung betrifft ein Verfahren zum Betreiben einer Automatisierungsanlage. Überdies betrifft die vorliegende Erfindung eine Automatisierungsanlage.

Bei heutigen Automatisierungsanlagen ist der unberechtigte Zugriff auf die einzelnen Automatisierungsgeräte oder die auf den Automatisierungsgeräten betriebenen Programme von großer Bedeutung. Das Engineering der IT-Sicherheit in Automatisierungsanlagen ist heute in der Regel direkt an die Softwarekomponenten und Hardwarekomponenten gebunden. Dabei werden vor einer Inbetriebnahme der Automatisierungsanlage die Security-Mechanismen in den einzelnen Automatisierungsgeräten bzw. Komponenten entsprechend den Kundenwünschen und/oder dem ermittelten Schutzbedarf konfiguriert. Dadurch wird ein bestimmtes Schutzniveau und somit ein bestimmter Sicherheitswert erreicht.

Einen Ansatz zur Bestimmung von Sicherheitswerten als Mittel für die qualitative Bewertung des Schutzniveaus eines Systems oder einer Automatisierungsanlage stellen zum Beispiel die sogenannten Security Assurance Levels (SAL) dar, die in der Norm IEC 62443 beschrieben sind. Verschiedene während der Betriebsphase der Automatisierungsanlage vorgenommene Änderungen der Hardwarekonfiguration - beispielsweise wenn bestimmte Automatisierungsgeräte ausgetauscht werden - können unter Umständen eine Änderung des Schutzniveaus und des dazugehörigen Sicherheitswerts der Automatisierungsanlage bewirken. Dabei ist auch vorgesehen, dass derartige Ereignisse als Trigger für eine Neuermittlung des Schutzbedarfs betrachtet werden und anschließend die Sicherheitskonfiguration der Automatisierungsanlage oder der einzelnen Automatisierungsgeräte neu vorgenommen wird.

In der Praxis wird eine Neukonfiguration der Security-Mechanismen jedoch häufig vernachlässigt, da es keinen Mechanismus gibt, welcher eine Neu-Konfiguration der Security-Mechanismen durch einen Benutzer erzwingt oder diese automatisch (ohne eine Mitwirkung des Benutzers) vornimmt. Damit kann ein einmal eingestelltes Schutzniveau und somit ein bestimmter Sicherheitswert nicht sichergestellt werden.

Es ist Aufgabe der vorliegenden Erfindung, eine Automatisierungsanlage der eingangs genannten Art auf einfache Weise sicherer zu betreiben.

Diese Aufgabe wird durch ein Verfahren mit den Merkmalen des Patentanspruchs 1 sowie durch eine Automatisierungsanlage mit den Merkmalen des Patentanspruchs 10 gelöst. Vorteilhafte Weiterbildungen der vorliegenden Erfindung sind in den Unteransprüchen angegeben.

Das erfindungsgemäße Verfahren zum Betreiben einer Automatisierungsanlage umfasst das Bereitstellen von zumindest zwei Automatisierungsgeräten der Automatisierungsanlage, das Bereitstellen einer Automatisierungsaufgabe für die Automatisierungsanlage und das Festlegen zumindest eines Sicherheitswerts, der qualitativ einen Schutz gegen einen unberechtigten Zugriff und/oder ein Schutzniveau, das ausreichend ist, um einem solchen Zugriff standzuhalten, beschreibt, in Abhängigkeit von der Automatisierungsaufgabe. Zusätzlich umfasst das Verfahren das Unterteilen der Automatisierungsaufgabe in zumindest zwei Teilaufgaben und das Verteilen der zumindest zwei Teilaufgaben an die zumindest zwei Automatisierungsgeräte in Abhängigkeit von dem zumindest einen festgelegten Sicherheitswert.

Unter dem Begriff Automatisierungsanlage sollen nachfolgend Automatisierungssysteme, Steuerungsanlagen, Produktionsanlangen, Fertigungsanlagen oder dergleichen verstanden werden. Die Automatisierungsgeräte der Automatisierungsanlage können dazu ausgebildet sein, eine Rechenaufgabe durchzuführen. Zu diesem Zweck können die Automatisierungsgeräte eine Recheneinrichtung, beispielsweise einen Prozessor (CPU), umfassen. Des Weiteren können die Automatisierungsgeräte Ein-/Ausgabeeinrichtungen umfassen, die Prozessgrößen erfassen können und entsprechende Stellsignale ausgeben können.

Zunächst wird für die gesamte Automatisierungsanlage ein Sicherheitswert vorgegeben. Dabei können auch mehrere Sicherheitswerte vorgegeben werden. Der Sicherheitswert wird auch als Security-Level bezeichnet. Der Sicherheitswert beschreibt qualitativ den Schutz gegen einen unberechtigten Zugriff (bzw. Angriff) einer bestimmten Stärke bzw. das Schutzniveau, das ausreichend ist, um einem solchen unberechtigten Zugriff (bzw. Angriff) standzuhalten. Der Zugriff kann dabei einen Lauschangriff auf die Daten oder eine Manipulation der Daten bedeuten. Der Sicherheitswert betrifft also die IT-Sicherheit der Automatisierungsanlage. Der Sicherheitswert wird zu einer Automatisierungsaufgabe bestimmt.

Die Automatisierungsaufgabe kann beispielsweise das Regeln eines entsprechenden Prozesses umfassen. Die Automatisierungsaufgabe kann in mehrere Teilaufgaben unterteilt werden. Die Teilaufgaben können einen entsprechenden Programmcode und/oder zeitliche Anforderungen des Prozesses umfassen. Die einzelnen Teilaufgaben können anschließend an die Automatisierungsgeräte übertragen werden. Dabei können einem Automatisierungsgerät auch mehrere Teilaufgaben zugeordnet werden. Durch die Berücksichtigung des zumindest einen Sicherheitswerts bei der Zuordnung der Teilaufgaben kann die Automatisierungsaufgabe besonders effektiv vor einem unberechtigten Zugriff geschützt werden.

Bevorzugt wird die Automatisierungsaufgabe in Abhängigkeit von dem zumindest einen Sicherheitswert in die zumindest zwei Teilaufgaben unterteilt. Die Automatisierungsaufgabe kann beispielsweise in Teilaufgaben unterteilt werden, die eine hohe Sicherheit und damit beispielsweise eine entsprechende Verschlüsselung der Daten benötigen. Ebenso können Teilaufgaben bereitgestellt werden, die eine geringe Sicherheit benötigen.

In einer Ausführungsform wird beim Verteilen der Teilaufgaben an die Automatisierungsgeräte zumindest ein Gerätesicherheitswert für jedes der Automatisierungsgeräte bestimmt. Die Teilaufgaben können unterschiedlichen Automatisierungsgeräten zugeordnet werden. Die Teilaufgaben, die vor einem unberechtigten Zugriff geschützt werden sollen, können einem Automatisierungsgerät zugeordnet werden, mit dem der entsprechende Sicherheitswert bereitgestellt werden kann. Die Teilaufgaben, die keine zu schützenden Informationen enthalten, können an Automatisierungsgeräte übertragen werden, die nur einen geringen Sicherheitswert bzw. Security-Level bereitstellen können. Somit kann auf einfache Weise das notwendige Sicherheitsniveau eingehalten werden.

Dabei wird bevorzugt in Abhängigkeit von dem für jedes der Automatisierungsgeräte bestimmten zumindest einen Gerätesicherheitswert ein maximal erreichbarer Sicherheitswert der Automatisierungsanlage bestimmt. Der Gerätesicherheitswert entspricht dem zuvor beschriebenen Sicherheitswert. Der Gerätesicherheitswert beschreibt den Sicherheitswert, der mit einem Automatisierungsgerät bereitgestellt werden kann. In Abhängigkeit von dem genauen Anwendungsfall, den Automatisierungsgeräten, die momentan in dem Automatisierungssystem vorhanden sind, deren jeweiligen Gerätesicherheitswerten, die insbesondere in Abhängigkeit von dem genauen Einsatzszenario festgelegt werden, kann ein Sicherheitswert für die komplette Automatisierungsanlage bestimmt werden. Somit kann auf einfache Weise der Sicherheitswert der Automatisierungsanlage ermittelt werden.

In einer Ausgestaltung wird eine Empfehlung für einen Austausch von zumindest einem der Automatisierungsgeräte ausgegeben, falls der maximal erreichbare Sicherheitswert geringer ist als der festgelegte Sicherheitswert. Der Sicherheitswert der Automatisierungsanlage, der anhand der Gerätesicherheitswerte der einzelnen Komponenten bzw. Automatisierungsgeräte ermittelt wurde, kann mit dem festgelegten Sicherheitswert verglichen werden. Wenn der festgelegte Sicherheitswert mit der momentan für die Bearbeitung der Automatisierungsaufgabe verwendeten Automatisierungsanlage nicht gewährleistet werden kann, kann ein Warnsignal ausgegeben werden. Zudem kann eine Empfehlung ausgegeben werden, welche der Automatisierungsgeräte der Automatisierungsanlage verwendet werden sollen. Dies kann auch einen Vorschlag beinhalten, welche der Automatisierungsgeräte durch ein anderes oder andere ersetzt werden sollen.

Bevorzugt wird der zumindest eine Gerätesicherheitswert für jedes der Automatisierungsgeräte vor einer Inbetriebnahme der Automatisierungsanlage bestimmt. Die Teilaufgaben werden an die einzelnen Automatisierungsgeräte übertragen, auf diese heruntergeladen und dort zum Ablauf gebracht. Bereits vor dem Herunterladen des Programmcodes soll nun der Gerätesicherheitswert aller Automatisierungsgeräte in der Automatisierungsanlage bestimmt werden. Damit kann zuverlässig verhindert werden, dass eine zu schützende Teilaufgabe auf ein Automatisierungsgerät übertragen wird, das die geforderte Sicherheit nicht bereitstellen kann.

In einer weiteren Ausführungsform wird der zumindest eine Gerätesicherheitswert für jedes der Automatisierungsgeräte während eines Betriebs der Automatisierungsanlage bestimmt. Auch nach der Inbetriebnahme der Automatisierungsanlage kann die Gerätesicherheit aller Automatisierungsgeräte überprüft werden. Dies kann beispielsweise zyklisch zu vorgegebenen Zeitpunkten erfolgen. Die Gerätesicherheiten können auch in Abhängigkeit von einem Ereignis, beispielsweise dem Austausch eines der Automatisierungsgeräte erfolgen. Damit kann die IT-Sicherheit auch während einer Neu-Konfiguration der Automatisierungsanlage gewährleistet werden.

Bevorzugt wird das Unterteilen und/oder das Verteilen der zumindest zwei Teilaufgaben in Abhängigkeit von einer serviceorientierten Beschreibung der Automatisierungsanlage durchgeführt. Bei dem Automatisierungssystem wird bevorzugt durchgängig eine serviceorientierte Architektur verwendet. Dabei kann mit einer Steuereinrichtung im Engineering die Automatisierungsaufgabe vorgegeben werden. Diese kann dann in Teilaufgaben bzw. Services unterteilt werden, die technische und nicht-technische Anforderungen umfassen. Mithilfe eines "intelligenten" Algorithmus nimmt die Steuereinrichtung auf Basis festgelegter Kriterien eine Verteilung der Teilaufgaben bzw. Dienste auf die jeweilige Hardware, also die Automatisierungsgeräte, vor. Dabei sind auch manuelle Änderungen - beispielsweise durch die Eingabe einer Bedienperson - möglich. Die Steuereinrichtung generiert auf Basis der serviceorientierten Beschreibung der Automatisierungsanlage eine entsprechende Datei, beispielsweise eine XML-Datei, die die Automatisierungsaufgabe als Programmcode und eine Konfiguration der Automatisierungsanlage umfassen kann. Damit können die Teilaufgaben den Automatisierungsgeräten einfach zugeordnet werden.

In einer weiteren Ausgestaltung wird das Unterteilen und/oder das Verteilen der zumindest zwei Teilaufgaben in Abhängigkeit von einer Rechenleistung der Automatisierungsgeräte durchgeführt. Zudem ist denkbar, dass das Verteilen der Teilaufgaben in Abhängigkeit von einer Topologie der Automatisierungsanlage erfolgt. Auch können zeitliche Anforderungen der jeweiligen Teilaufgaben berücksichtigt werden. Dies ermöglicht einen effizienten Betrieb der Automatisierungsanlage.

Die erfindungsgemäße Automatisierungsanlage umfasst zumindest zwei Automatisierungsgeräte, eine Eingabeeinrichtung zum Bereitstellen einer Automatisierungsaufgabe für die Automatisierungsanlage und zum Festlegen zumindest eines Sicherheitswerts in Abhängigkeit der Automatisierungsaufgabe, der qualitativ einen Schutz gegen einen unberechtigten Zugriff und/oder ein Schutzniveau, das ausreichend ist, um einem solchen Zugriff standzuhalten, beschreibt, und eine Steuereinrichtung zum Unterteilen der Automatisierungsaufgabe in zumindest zwei Teilaufgaben und zum Verteilen der zumindest zwei Teilaufgaben an die zumindest zwei Automatisierungsgeräte in Abhängigkeit von dem zumindest einen festgelegten Sicherheitswert. Die Steuereinrichtung kann dabei Hardwarekomponenten und Softwarekomponenten umfassen.

Die zuvor im Zusammenhang mit dem erfindungsgemäßen Verfahren beschriebenen Vorteile und Weiterbildungen können in gleicher Weise auf die erfindungsgemäße Automatisierungsanlage übertragen werden.

Die vorliegende Erfindung wird nun anhand der beigefügten Zeichnung näher erläutert. Dabei zeigt die einzige Figur eine schematische Darstellung zur Verdeutlichung des Verfahrens zum Betreiben einer Automatisierungsanlage.

Das nachfolgend näher geschilderte Ausführungsbeispiel stellt eine bevorzugte Ausführungsform der vorliegenden Erfindung dar.

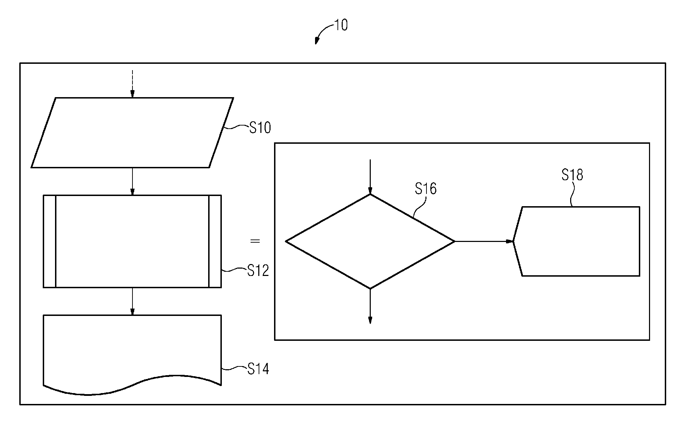

Die Figur zeigt ein Diagramm 10, in dem die Schritte zur Verdeutlichung des Verfahrens zum Betreiben einer Automatisierungsanlage dargestellt sind. Die Automatisierungsanlage weist zumindest zwei Automatisierungsgeräte auf. Mit den Automatisierungsgeräten können Rechenaufgaben durchgeführt werden. Ebenso können die Automatisierungsgeräte dazu ausgebildet sein, Prozessgrößen zu erfassen und/oder Stellsignale auszugeben. Die Automatisierungsanlage wird auf Basis einer serviceorientierten Beschreibung betrieben.

In einem ersten Schritt S10 wird eine Automatisierungsaufgabe festgelegt. Die Automatisierungsaufgabe kann technische und nicht-technische Anforderungen umfassen. Dies kann beispielsweise durch eine entsprechende Eingabe in eine Eingabeeinrichtung der Automatisierungsaufgabe erfolgen. Im Anschluss kann in Abhängigkeit von der Automatisierungsaufgabe ein Sicherheitswert für die Automatisierungsaufgabe festgelegt werden. Dies kann beispielsweise durch eine Benutzereingabe erfolgen. Der Sicherheitswert kann auch automatisch von einer Steuereinrichtung der Automatisierungsanlage ermittelt werden. Der Sicherheitswert, der auch unter dem Begriff Security-Level bekannt ist, beschreibt qualitativ den Schutz gegen einen unberechtigten Zugriff (bzw. Angriff) einer bestimmten Stärke bzw. das Schutzniveau, das ausreichend ist, um einem solchen unberechtigten Zugriff (bzw. Angriff) standzuhalten. Damit wird die Steuereinrichtung dahingehend erweitert, dass neben den Anlagenfunktionalitäten auch die geforderten Schutzniveaus bereitgestellt werden können.

Weiterhin wird im Schritt S10 die Automatisierungsaufgabe in mehrere Teilaufgaben unterteilt. Die Teilaufgaben können in Abhängigkeit von den jeweiligen Sicherheitswerten, die zu ihrer Bearbeitung erforderlich sind, eingeteilt werden.

In einem weiteren Schritt S12 werden die Teilaufgaben den Automatisierungsgeräten zugeordnet. Im Idealfall generiert die Steuereinrichtung eine entsprechende Beschreibung, beispielsweise eine XML-Beschreibung, welche die optimale Verteilung der Teilaufgaben auf die Automatisierungsgeräte bzw. die Dienstplatzierung für den geforderten Sicherheitswert erfüllt.

Während der Zuordnung der Teilaufgaben zu den Automatisierungsgeräten wird in einem Schritt S16 überprüft, ob der festgelegte Sicherheitswert mit der Automatisierungsanlage erreicht werden kann. Dazu kann der Sicherheitswert der Automatisierungsanlage ermittelt werden. Zu diesem Zweck kann für jedes der Automatisierungsgeräte ein Gerätesicherheitswert bestimmt werden. Anhand der Gerätesicherheitswerte kann ein maximal erreichbarer Sicherheitswert der Automatisierungsanlage bestimmt werden. Der maximal erreichbare Sicherheitswert wird mit dem festgelegten Sicherheitswert verglichen.

Wenn der geforderte Sicherheitswert durch die Automatisierungsanlage nicht bereitgestellt werden kann, z. B. weil die zur Verfügung stehenden Automatisierungsgeräte bzw. HardwareKomponenten nicht über die für den Sicherheitswert notwendigen Security-Mechanismen verfügen, erfolgt in Schritt S18 von der Steuereinrichtung eine Ausgabe.

Die Ausgabe in Schritt S18 kann einem Anwender oder einem Bediener den mit der Automatisierungsanlage maximal erreichbaren Sicherheitswert anzeigen. Zudem kann eine Empfehlung ausgegeben werden, wie der geforderte Sicherheitswert erreicht werden kann. Diese Empfehlung kann eine vorzunehmende Änderung in der Konfiguration der Automatisierungsgeräte in der Automatisierungsanlage beinhalten und/oder eine Vorgabe, wie der Sicherheitswert mit den Automatisierungsgeräten in der Automatisierungsanlage erreicht werden kann.

Wenn der festgelegte Sicherheitswert mit der Automatisierungsanlage bereitgestellt werden kann, wird das Verfahren mit dem Schritt S14 fortgesetzt. Dabei werden die Teilaufgaben auf die Automatisierungsgeräte übertragen. Dazu kann eine entsprechende XML-Datei geladen werden. Dies bewirkt, dass die Teilaufgaben bzw. Services so, wie sie in der XML-Datei festgelegt sind, auf den Automatisierungsgeräten platziert werden. Damit ist keine unbemerkte Überschreitung des festgelegten Sicherheitswerts möglich.

Die Sicherheitsfunktionalitäten der einzelnen Automatisierungsgeräte, auf denen die Teilaufgaben bzw. Services durchgeführt werden, dienen der Umsetzung des geforderten Schutzniveaus eines Services. Dies kann den Optimierungsaufwand der Übertragung der Teilaufgaben erhöhen. Die Kommunikationsmechanismen, die zur Kommunikation der Services untereinander zur Anwendung kommen, sollten ebenfalls bestimmten Sicherheitswerten, auch Security-Level genannt, genügen. Es können auch Services, die auf einem Automatisierungsgerät ausgeführt werden, unterschiedliche Schutzniveau-Stufen zugeordnet werden. Dies würde wiederum den Optimierungsaufwand des Platzierungsalgorithmus für die Teilaufgaben bzw. Services vereinfachen.

## Patentansprüche

1. Verfahren zum Betreiben einer Automatisierungsanlage durch
- Bereitstellen von zumindest zwei Automatisierungsgeräten der Automatisierungsanlage,
- Bereitstellen einer Automatisierungsaufgabe für die Automatisierungsanlage und
- Festlegen zumindest eines Sicherheitswerts, der qualitativ einen Schutz gegen einen unberechtigten Zugriff und/oder ein Schutzniveau, das ausreichend ist, um einem solchen unberechtigten Zugriff standzuhalten, beschreibt, in Abhängigkeit von der Automatisierungsaufgabe (S10),
**gekennzeichnet durch**
- Unterteilen der Automatisierungsaufgabe in zumindest zwei Teilaufgaben und
- Verteilen der zumindest zwei Teilaufgaben an die zumindest zwei Automatisierungsgeräte in Abhängigkeit von dem zumindest einen festgelegten Sicherheitswert (S12).

2. Verfahren nach Anspruch 1, **dadurch gekennzeichnet, dass** die Automatisierungsaufgabe in Abhängigkeit von dem zumindest einen Sicherheitswert in die zumindest zwei Teilaufgaben unterteilt wird.

3. Verfahren nach Anspruch 1 oder 2, **dadurch gekennzeichnet, dass** beim Verteilen der Teilaufgaben an die Automatisierungsgeräte zumindest ein Gerätesicherheitswert für jedes der Automatisierungsgeräte bestimmt wird.

4. Verfahren nach Anspruch 3, **dadurch gekennzeichnet, dass** in Abhängigkeit von dem für jedes der Automatisierungsgeräte bestimmten zumindest einen Gerätesicherheitswert ein maximal erreichbarer Sicherheitswert der Automatisierungsanlage bestimmt wird (S16).

5. Verfahren nach Anspruch 4, **dadurch gekennzeichnet, dass** eine Empfehlung für einen Austausch von zumindest einem der Automatisierungsgeräte ausgegeben wird, falls der maximal erreichbare Sicherheitswert geringer ist als der festgelegte Sicherheitswert (S18).

6. Verfahren nach einem der Ansprüche 3 bis 5, **dadurch gekennzeichnet, dass** der zumindest eine Gerätesicherheitswert für jedes der Automatisierungsgeräte vor einer Inbetriebnahme der Automatisierungsanlage bestimmt wird.

7. Verfahren nach einem der Ansprüche 3 bis 6, **dadurch gekennzeichnet, dass** der zumindest eine Gerätesicherheitswert für jedes der Automatisierungsgeräte während eines Betriebs der Automatisierungsanlage bestimmt wird.

8. Verfahren nach einem der vorhergehenden Ansprüche, **dadurch gekennzeichnet, dass** das Unterteilen und/oder das Verteilen der zumindest zwei Teilaufgaben in Abhängigkeit von einer serviceorientierten Beschreibung der Automatisierungsanlage durchgeführt wird.

9. Verfahren nach einem der vorhergehenden Ansprüche, **dadurch gekennzeichnet, dass** das Unterteilen und/oder das Verteilen der zumindest zwei Teilaufgaben in Abhängigkeit von einer Rechenleistung der Automatisierungsgeräte durchgeführt wird.

10. Automatisierungsanlage mit
- zumindest zwei Automatisierungsgeräten
- einer Eingabeeinrichtung zum Bereitstellen einer Automatisierungsaufgabe für die Automatisierungsanlage und zum Festlegen zumindest eines Sicherheitswerts, der qualitativ einen Schutz gegen einen unberechtigten Zugriff und/oder ein Schutzniveau, das ausreichend ist, um einem solchen unberechtigten Zugriff standzuhalten, beschreibt, in Abhängigkeit von der Automatisierungsaufgabe,
**gekennzeichnet durch**
- eine Steuereinrichtung zum Unterteilen der Automatisierungsaufgabe in zumindest zwei Teilaufgaben und zum Verteilen der zumindest zwei Teilaufgaben an die zumindest zwei Automatisierungsgeräte in Abhängigkeit von dem zumindest einen festgelegten Sicherheitswert.
